# EUROPÄISCHE PATENTANMELDUNG

(11) **EP 2 530 409 A2**
(43) Veröffentlichungstag der Anmeldung: **05.12.2012**
(21) Anmeldenummer: 12003910.2
(22) Anmeldetag: 09.03.2012
(51) Int. Cl.: F25B 40/00

(54) **Wärmepumpenanlage sowie Verfahren zum Betrieb einer Wärmepumpenanlage**

(30) Priorität: 03.06.2011 DE 202011102503 U
(71) Anmelder: Glen Dimplex Deutschland GmbH, 95326 Kulmbach (DE)
(72) Erfinder: Schmitt, Gunnar, 95362 Kupferberg (DE); Shirkhani, Ghanbar, 95119 Naila (DE)
(74) Vertreter: FDST Patentanwälte

(57) **Zusammenfassung**

Um den Wirkungsgrad einer Wärmepumpenanlage zu erhöhen ist die Anordnung eines Kombielements (12A, 12B) im Kreislauf der Wärmepumpenanlage vorgesehen. Das Kombielement (12A, 12B) bildet einen Zwischenwärmetauscher mit integriertem Sammler für flüssiges Arbeitsmittel. Der Zwischenwärmetauscher ist in einen ersten Teilabschnitt (10A) sowie in einen zweiten Teilabschnitt (10B) des Kreislaufes geschaltet und dient zum Wärmeübertrag zwischen dem flüssigen und dem gasförmigen Arbeitsmittel. Das Kombielement (12A, 12B) weist dabei einen offenen Innenraum (14) auf, welcher in einen der Teilabschnitte (10A, 10B) geschaltet ist und damit einen offenen Strömungsweg bildet. In diesem Innenraum (14) ist ein Sammelraum (20) für flüssiges Arbeitsmittel angeordnet. Durch die Anordnung des Kombielements (12A, 12B) wird insgesamt eine höhere Effizienz beim Betrieb der Wärmepumpenanlage erreicht.

## Beschreibung

Die Erfindung betrifft eine Wärmepumpenanlage sowie ein Verfahren zum Betrieb einer Wärmepumpenanlage.

Wärmepumpenanlagen, kurz auch als Wärmepumpen bezeichnet, dienen zur Gewinnung von Energie aus der Umgebung, beispielsweise der Umgebungsluft bei sogenannten Luft-Wasser-Wärmepumpen oder auch aus beispielsweise der im Erdboden oder im Grundwasser enthaltenen Energie bei sogenannten Wasser-Wasser- oder Sole-Wasser-Wärmepumpen (im Folgenden gemeinsam als Wasser-Wasser-Wärmepumpe bezeichnet). Die Wärmepumpen können als reversible Wärmepumpen ausgeführt werden. Diese werden je nach Betriebsmodus sowohl zum Kühlen als auch zum Heizen eingesetzt.

Die Wärmepumpen weisen allgemein ein in einem Kreislauf geführtes Arbeitsmittel, auch als Kältemittel bezeichnet, auf. Im Kreislauf sind ein Verdichter, ein Verflüssiger (Kondensator), ein Drosselorgan, wie beispielsweise ein Expansionsventil sowie ein Verdampfer angeordnet. Der Kreislauf lässt sich in zwei Teilabschnitte unterteilen, nämlich einen ersten Teilabschnitt, in dem das Arbeitsmittel zumindest weitgehend als flüssiges Arbeitsmittel vorliegt und in einen zweiten Teilabschnitt, in dem das Arbeitsmittel zumindest weitgehend gasförmig vorliegt. Allgemein wird das gasförmige Arbeitsmittel im Verdichter verdichtet, von dort zum Kondensator geleitet, wo es unter Wärmeabgabe an einen Sekundärkreislauf kondensiert. Anschließend wird es über das Drosselorgan geführt und entspannt und zum Verdampfer geleitet, wo es durch Wärmeaufnahme aus der Umgebung verdampft und anschließend als gasförmiges Arbeitsmittel wieder dem Verdichter zugeführt wird. Der erste Teilabschnitt, in dem das Arbeitsmittel flüssig ist, ist daher der durch den Abschnitt zwischen Verflüssiger und Verdampfer und der zweite Teilabschnitt, in dem das Arbeitsmittel gasförmig ist, ist durch den Teilabschnitt zwischen Verdampfer und Kondensator gebildet.

Zum Schutz des Verdichters sollte diesem möglichst ausschließlich gasförmiges Arbeitsmittel ohne flüssige Bestandteile zugeführt werden.

Der Erfindung liegt die Aufgabe zugrunde, eine Wärmepumpenanlage mit einem hohen Wirkungsgrad, dem sogenannten "Coefficient of performance" (COP) sowie ein entsprechendes Verfahren zum Betrieb der Wärmepumpenanlage anzugeben.

Die Aufgabe wird gemäß der Erfindung gelöst durch eine Wärmepumpenanlage mit den Merkmalen des Anspruchs 1 sowie durch ein Verfahren mit den Merkmalen des Anspruchs 15. Danach ist die Anordnung eines zusätzlichen Kombielements im Kreislauf vorgesehen, das sowohl in dem ersten als auch in dem zweiten Teilabschnitt eingebunden ist und als ein Zwischenwärmetauscher zum Wärmetausch zwischen dem gasförmigen und dem flüssigen Arbeitsmittel mit integriertem Sammelraum für flüssiges Arbeitsmittel ausgebildet ist.

Durch die Anordnung des Kombielements und seiner Funktion als Zwischenwärmetauscher wird daher das gasförmige aus dem Verdampfer kommende Arbeitsmittel zusätzlich überhitzt und gleichzeitig wird das flüssige Arbeitsmittel aus dem Verflüssiger / Kondensator unterkühlt. Durch den im Kombielement enthaltenen Zwischenwärmetauscher wird daher eine zusätzliche Wärmeübertragungsfläche bereitgestellt, so dass zusätzlich zu der vom Verdampfer bereitgestellten Wärmetauscherfläche eine weitere Wärmeübertragungsfläche zur Überhitzung des Arbeitsmittels bereitgestellt wird. Durch diesen zusätzlichen Zwischenwärmetauscher nimmt die Verdampfungstemperatur zu, wodurch der COP der Wärmepumpe positiv beeinflusst wird.

Gleichzeitig wird über den Zwischenwärmetauscher ergänzend zum Verflüssiger eine zusätzliche Übertragungsfläche für die erforderliche Unterkühlung des Arbeitsmittels bereitgestellt. Hierdurch nimmt die Temperatur des kondensierten Arbeitsmittels ab, was sich ebenfalls positiv auf den COP der Wärmepumpe auswirkt. Als Folge der zusätzlichen Unterkühlung ergibt sich auf der Verdampferseite eine Vergrößerung des energetisch nutzbaren Potentials. Der größere energetische Nutzen wird im Wesentlichen durch die konstruktive Ausführung und eine angepasste Regelstrategie bestimmt.

Von besonderer Bedeutung ist die Ausgestaltung des Kombielements zusätzlich als Sammler, in dem flüssiges Arbeitsmittel angesammelt wird. Bei diesem flüssigen Arbeitsmittel handelt es sich beispielsweise um das im ersten Teilabschnitt geführte flüssige Arbeitsmittel oder auch - je nach Anordnung des Kombielements im Kreislauf - um kondensiertes Arbeitsmittel. Das Kombielement zeichnet sich schließlich durch eine dritte Funktion, nämlich als Abscheider aus. Das Kombielement vereint daher in sich drei Bauelemente, nämlich einen Zwischenwärmetauscher (Economizer), einen Abscheider sowie einen Sammler. Insgesamt ist dadurch der gerätetechnische Aufwand sowie der Installationsaufwand gering gehalten.

Durch diese Ausgestaltung besteht der besondere Vorteil, dass zuverlässig sichergestellt ist, dass in allen Betriebsmodi der Wärmepumpenanlage dem Verdichter möglichst ausschließlich gasförmiges Arbeitsmittel zugeführt wird.

Allgemein ist das Kombielement vorzugsweise saugseitig vor dem Verdichter im zweiten Teilabschnitt angeordnet, ohne dass also eine weitere Komponente zwischen dem Kombielement und dem Verdichter zwischengeschaltet ist. Vorteilhafterweise ist ergänzend das Kombielement im ersten Teilabschnitt vor dem Drosselorgan und damit zwischen dem Verflüssiger und dem Drosselorgan angeordnet.

Allgemein ist bei sogenannten Luft-Wasser-Wärmepumpen üblicherweise in regelmäßigen Abständen ein Abtauvorgang des Verdampfers erforderlich. Im Abtaumodus wird der Kreislauf im Vergleich zum Normalbetrieb in umgekehrter Strömungsrichtung betrieben (sogenannte Kreislaufumkehr), so dass der im Normalbetrieb als Verdampfer arbeitende Wärmetauscher nunmehr als Kondensator wirkt und umgekehrt der im Normalbetrieb als Verflüssiger / Kondensator arbeitende Wärmetauscher als Verdampfer arbeitet. Der Luft-Wasser-Wärmetauscher ist insbesondere unmittelbar dem Verdichter nachgeschaltet und wird mit dem verdichteten "Heißgas" für den Abtauvorgang beaufschlagt.

Gemäß einer zweckdienlichen Weiterbildung ist das Drosselorgan ein elektrisch oder elektronisch geregeltes Expansionsventil. Durch die Einbindung des Kombielements in den Kreislauf ist für einen effizienten Betrieb der Wärmepumpe eine spezielle Regelung von Vorteil, um einen bestmöglichen Wirkungsgrad zu erzielen. Um dies bestmöglich auszunutzen ist hier der Einsatz des elektrisch oder elektronisch geregelten Expansionsventils von besonderem Vorteil. Dies dient letztendlich auch dazu, den angestrebten hohen Wirkungsgrad zu erzielen.

Das Kombielement ist zweckdienlicherweise als ein Gefäß mit einem den Sammelraum aufweisenden Innenraum ausgebildet. In diesen Innenraum münden Anschlussstutzen, die im Innenraum Mündungsöffnungen haben. Die Anschlussstutzen dienen zum Anschluss an einen der beiden Teilabschnitte und bilden einen Zuströmstutzen sowie einen Abströmstutzen. Ergänzend ist durch das Kombielement eine geschlossene Leitung für die Durchführung des Arbeitsmittels des anderen Teilabschnitts ausgebildet. Während also das Arbeitsmittel des einen Teilabschnitts durch den offenen Innenraum geführt wird und dort mit dem Sammelraum in Kontakt kommt oder durch diesen hindurchgeführt wird, wird das Arbeitsmittel in dem anderen Teilabschnitt als geschlossenes System durch das Kombielement hindurchgeführt. Hierdurch ist ein einfacher und sogleich sehr effizienter Aufbau des Kombielements erreicht. Die Anschlussstutzen sind dabei vorzugsweise an der Oberseite des Gefäßes angeordnet. Bei dem Gefäß handelt es sich insbesondere um ein zylindrisches, nach Art eines vorzugsweise zylindrischen Druckbehälters ausgebildetes Gefäß mit einem Boden sowie Deckel, die insbesondere jeweils gewölbt nach Art einer Kugelkalotte ausgebildet sind.

Die durch den Innenraum des Gefäßes hindurchgeführte geschlossene Leitung ist zweckdienlicherweise als eine Rohrwendel ausgebildet, so dass eine große Übertragungsfläche zur Wärmeübertragung bereitgestellt ist. Neben der großen Übertragungsfläche wird die Effizienz ebenfalls durch die sich ergebende Strömungscharakteristika im Gefäß erhöht. Da der offene Innenraum in den Kreislauf eingebunden ist, ergeben sich u.a. Verwirbelungen, die zu einem guten Wärmetauschverhalten beitragen.

Zumindest einer der Anschlussstutzen erstreckt sich für einen effizienten Wärmetausch in bevorzugter Ausgestaltung entlang des durch die Rohrwendel gebildeten Zentralraumes. Die Mündungsöffnung des jeweiligen Anschlussstutzens im Innenraum ist dabei in Abhängigkeit der jeweiligen Einbausituation geeignet gewählt. Grundsätzlich besteht die Möglichkeit, die Anschlussstutzen entweder mit dem ersten Teilabschnitt zu verbinden, so dass das flüssige Arbeitsmittel in den offenen Innenraum eingeleitet wird. Alternativ besteht grundsätzlich auch die Möglichkeit, den zweiten Teilabschnitt an die Anschlussstutzen anzuschließen, so dass das gasförmige Arbeitsmittel in den Innenraum geleitet wird.

Bei der ersten Alternative, bei der der erste Teilabschnitt an den offenen Innenraum angeschlossen ist, reicht zumindest der Abströmstutzen vorzugsweise bis in den Bodenbereich des Gefäßes, insbesondere bis in das untere Drittel des Gefäßes wo letztendlich der Sammelraum ausgebildet ist. Im Betrieb befindet sich im Sammelraum flüssiges Arbeitsmittel, welches kontinuierlich über den Zuführstutzen nachgeführt wird. Je nach Betriebszustand können sich im Gefäß unterschiedliche Füllstandshöhen einstellen. Durch die Anordnung des Abströmstutzens in diesem Sammelraum ist gewährleistet, dass das aus dem Kombielement ausströmende Arbeitsmittel zu 100% flüssig und ohne Gasanteile ist.

Bei einer derartigen Ausgestaltung ist üblicherweise ein Abtaumodus vorgesehen, also eine Kreislaufumkehr. Auch bei der Ausgestaltung als reversible Wärmepumpe ist für den Kühlbetrieb eine Kreislaufumkehr vorgesehen. Hierzu ist zweckdienlicherweise ein Umschaltorgan in den Kreislauf geschaltet, wie es vorzugsweise als Mehrwegeventil, beispielsweise 4-Wegeventil ausgebildet ist. Durch die gewählte Anordnung, nämlich dem Anschluss der Anschlussstutzen zwischen Drosselorgan und Verflüssiger (Verdampfer im Abtaumodus) strömt auch im Abtaumodus flüssiges Arbeitsmittel in den freien Innenraum (Sammelraum) ein. Durch die Kreislaufumkehr sind lediglich Zuström- und Abströmstutzen vertauscht. Vorzugsweise reichen beide Stutzen bis in den Sammelraum hinein, so dass in beiden Betriebsmodi, sowohl im Normalbetrieb als auch im Abtaumodus mit Kreislaufumkehr, jeweils sichergestellt ist, dass aus dem Kombielement über den entsprechenden Stutzen 100% flüssiges Arbeitsmittel ohne Gasanteile austritt.

Vorzugsweise ist die Wärmepumpenanlage als reversible Wärmepumpenanlage ausgebildet, bei der also zwischen einem Heizmodus und einem Kühlmodus durch Kreislaufumkehr umschaltbar ist.

Gemäß einer vorteilhaften Alternative ist der zweite Teilabschnitt an die Anschlussstutzen angeschlossen, so dass also das gasförmige Arbeitsmittel in den offenen Innenraum einströmt und zu dem Sammelraum gelangen kann.

Der Abströmstutzen steht hierbei mit der Saugseite des Verdichters in Verbindung. Um zu gewährleisten, dass dieser ausschließlich mit gasförmigen Arbeitsmittel ohne Flüssigkeitsanteile beaufschlagt wird, mündet der Abströmstutzen im oberen Bereich des Gehäuses. Seine Mündungsöffnung liegt oberhalb des Sammelraums.

Ergänzend ist vorgesehen, dass der Abströmstutzen sich in den Innenraum des Gehäuses hinein erstreckt und insbesondere in etwa u-förmig ausgebildet ist. Der Abströmstutzen wird daher zunächst von der Deckelseite in Richtung zum Bodenbereich und anschließend wieder nach oben in den Deckelbereich geführt, wo er endet und seine Mündungsöffnung aufweist. Durch diese Maßnahme wird daher eine zusätzliche Wegstrecke für das ausströmende gasförmige Arbeitsmittel durch den Innenraum des Kombielements bereitgestellt, so dass ein zusätzlicher Wärmetausch mit dem auf einem höheren Druck- und Temperaturniveau befindlichen Arbeitsmittel im ersten Teilabschnitt erfolgt. Dies dient zur zusätzlichen Überhitzung des gasförmigen Arbeitsmittels, um somit zuverlässig zu gewährleisten, dass der Verdichter ausschließlich mit gasförmigen Arbeitsmittel beaufschlagt wird. Um ergänzend sicher zu stellen, dass kein direkter Übertritt vom Zuströmstutzen in den Abströmstutzen erfolgt, endet der Zuströmstutzen vorzugsweise unterhalb des Abströmstutzens.

Beide Varianten des Kombielements können wahlweise - je nach gewünschten Anforderungen - bei Luft-Wasser- oder bei Wasser-Wasser- (oder auch Sole-Wasser-) Wärmepumpen eingesetzt werden.

Ausführungsbeispiele der Erfindung werden im Folgenden anhand der Zeichnungen näher erläutert. Es zeigen jeweils in schematischen Darstellungen:
- Fig. 1A,B: jeweils ein Fließbild einer Luft-Wasser-Wärmepumpenanlage, einmal im Normalbetrieb (Fig. 1A) und einmal im Abtaumodus (Fig. 1B),
- Fig. 2: ein Fließbild einer Wasser-Wasser-Wärmepumpenanlage,
- Fig. 3: eine Schnittdarstellung durch ein Kombielement in einer ersten Ausführungsvariante und
- Fig. 4: eine Darstellung eines Kombielement gemäß einer zweiten Ausführungsvariante.

In den Figuren sind gleichwirkende Teile mit den gleichen Bezugszeichen versehen.

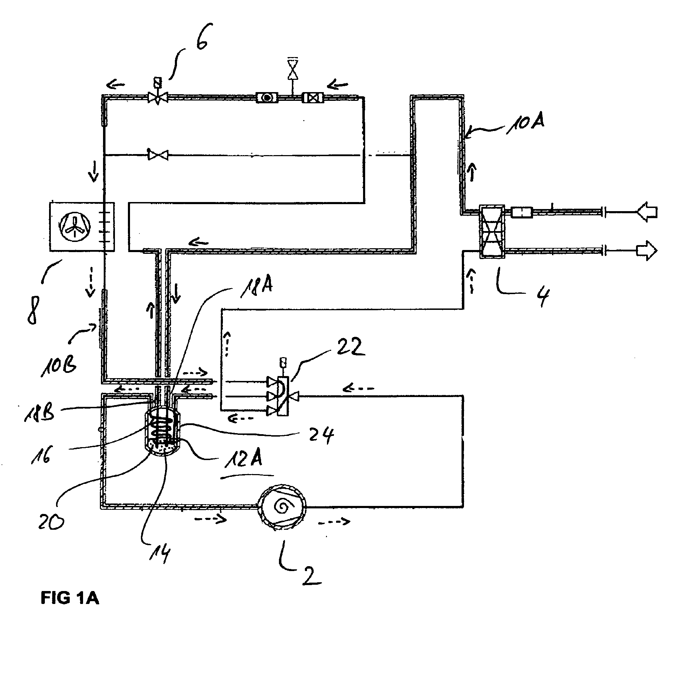

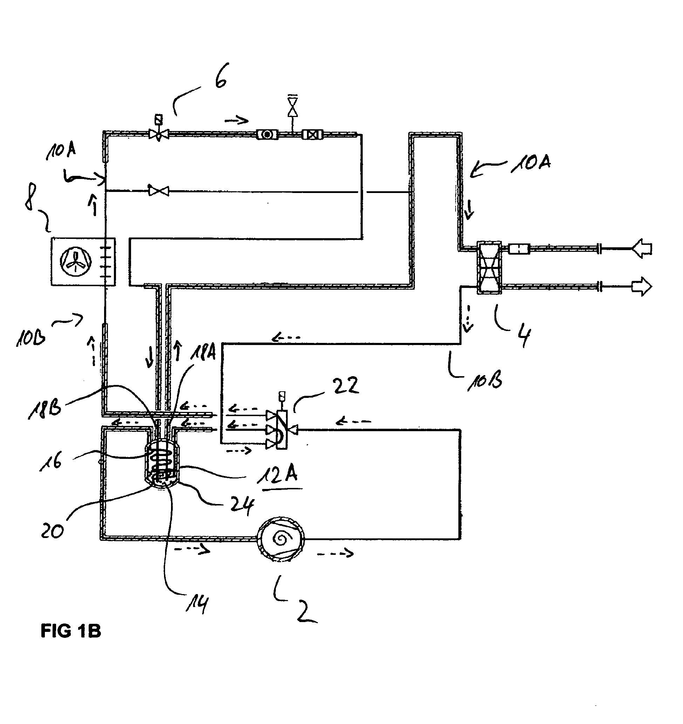

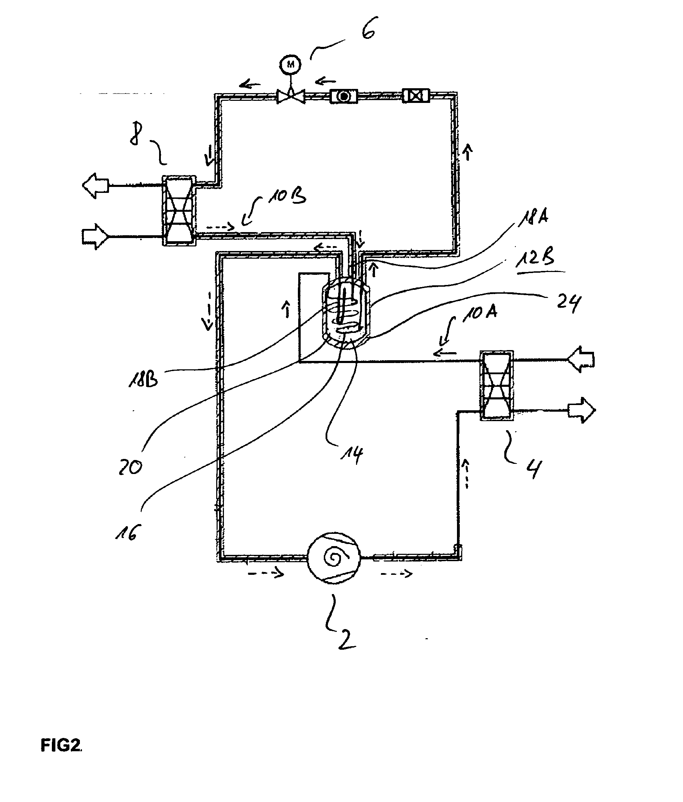

Die in den Fig. 1A, B sowie Fig. 2 anhand der Fließbilder dargestellten Wärmepumpenanlagen, weisen jeweils einen Verdichter 2, einen Verflüssiger 4, ein Drosselorgan 6 sowie einen Verdampfer 8 auf. Diese Komponenten sind in einem Kreislauf angeordnet, in dem ein Arbeitsmittel geführt ist. Der Kreislauf lässt sich in zwei Teilabschnitte unterteilen, nämlich einen ersten Teilabschnitt 10A, in dem das Arbeitsmittel flüssig ist und einen zweiten Teilabschnitt 10B, in dem das Arbeitsmittel gasförmig ist. Der erste Teilabschnitt 10A ist dabei der Abschnitt zwischen dem Verflüssiger 4 und dem Verdampfer 8 (in Strömungsrichtung des Arbeitsmittels gesehen). Der zweite Teilabschnitt 10B ist der Abschnitt zwischen dem Verdampfer 8 und dem Verflüssiger 4. Zur Illustration ist die Strömungsrichtung des Arbeitsmittels durch Pfeile angedeutet, wobei der gasförmige Aggregatszustand durch gestrichelte Pfeile und der flüssige Aggregatszustand durch durchgezogene Pfeile dargestellt ist.

In den Kreislauf ist ergänzend ein Kombielement 12A,B geschaltet, welches als kombinierter Zwischenwärmetauscher mit integriertem Sammler ausgebildet ist. Für den Wärmetausch ist das Kombielement 12A,B in beide Teilabschnitte 10A, 10B geschaltet, also an diese angeschlossen. Dabei ist das Kombielement 12A,B im ersten Teilabschnitt zwischen Verflüssiger 4 und Drosselorgan 6 und im zweiten Teilabschnitt 10B zwischen Verdampfer 8 und Verdichter 2 strömungstechnisch angeordnet.

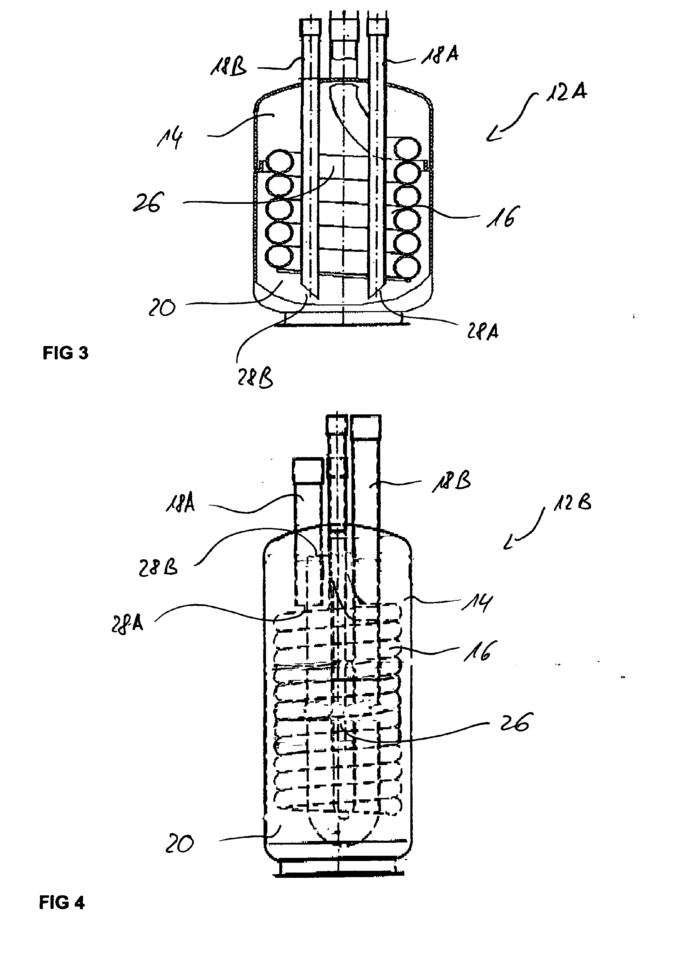

Bei dem Kombielement 12A,B handelt es sich um einen im Ausführungsbeispiel etwa zylindrischen Druckbehälter, dessen Innenraum 14 als offener Strömungsraum ausgebildet ist, welcher vom Arbeitsmittel des einen Teilabschnitts 10A, 10B durchströmt wird. Das Arbeitsmittel des anderen Teilabschnitts 10B, 10A wird demgegenüber in geschlossener Weise durch den Innenraum 14 geführt. Im Ausführungsbeispiel ist hierzu eine Rohrwendel 16 vorgesehen. Der spezielle Aufbau des Kombielements 12A,B ergibt sich in zwei alternativen Ausführungsvarianten aus den Figuren 3 und 4.

Die in Fig. 3 dargestellte Ausführungsvariante des Kombielements 12A wird im Ausführungsbeispiel für die in den Fig. 1A, 1B dargestellte Luft-Wasser-Wärmepumpenanlage herangezogen und das in Fig. 4 dargestellte Kombielement 12B bei der in Fig. 2 dargestellten Wasser-Wasser-Wärmepumpenanlage.

Wie bereits aus den Figuren 1A, 1B und Fig. 2 zu erkennen, sind die Teilabschnitte 10A, 10B jeweils an der Deckelseite des Kombielements 12A, 12B angeordnet. Die beiden mittleren Anschlüsse bilden dabei Anschlussstutzen 18A, 18B zum freien Innenraum 14, wohingegen die äußeren Anschlüsse über die Rohrwendel 16 miteinander verbunden sind. Bei dem Kombielement 12A gemäß der ersten Ausführungsvariante reichen die beiden Anschlussstutzen 18A, 18B beide bis in einen bodennahen Sammelraum 20 für flüssiges Arbeitsmittel. Das heißt die Mündungsöffnungen 28A,B beider Anschlussstutzen 18A, 18B tauchen im Betrieb in die im Sammelraum 20 angesammelte Flüssigkeit ein.

Bei der zweiten Ausführungsvariante des Kombielements 12B (Fig. 2, Fig. 4) sind die beiden Anschlussstutzen 18A, 18B unterschiedlich ausgestaltet. Der eine Anschlussstutzen 18B ist dabei als ein U-förmiges Rohr ausgebildet, das zunächst nach unten und anschließend wieder nach oben zu seiner Mündungsöffnung 28B geführt wird. Der zweite Anschlussstutzen 18A erstreckt sich in diesem Ausführungsbeispiel geradlinig in den Innenraum 14 hinein. Vorzugsweise endet der zweite Anschlussstutzen 18A in der oberen Hälfte, insbesondere im oberen Drittel des Innenraums 14. Die Mündungsöffnung 28A dieses zweiten Anschlussstutzens 18A liegt dabei unterhalb der Mündungsöffnung 28B des U-förmig gebogenen ersten Anschlussstutzens 18B.

Bei der Luft-Wasser-Wärmepumpenanlage gemäß den Fig. 1A, 1B ist neben dem Normalbetrieb der sogenannte Abtaumodus vorgesehen, wie er in Fig. 1B dargestellt ist. Zum Umschalten zwischen dem Normalbetrieb und dem Abtaumodus ist ein Umschaltorgan in den Kreislauf geschaltet, welches im Ausführungsbeispiel als 4-Wegeventil 22 ausgebildet ist. Die Verschaltung der einzelnen Anschlüsse in den beiden Betriebsmodi ergibt sich aus den Figuren.

Neben den erwähnten Komponenten sind typischerweise weitere Komponenten in den Kreislauf geschaltet, wie beispielsweise Serviceventile, Rückschlagventile, Temperaturfühler usw., welche vorliegend der Einfachheit halber weggelassen bzw. nicht weiter erläutert sind. Einige der in den Fig. 1A, 1B, 2 dargestellte Rohrleitungsabschnitte sind mit einer Isolierung dargestellt.

Der grundsätzliche und an sich bekannte Betrieb einer derartigen Wärmepumpenanlage ist wie folgt: Mit Hilfe des Verdampfers 8 wird Wärme aus der Umgebung über einen Wärmetauscherprozess an das im Kreislauf geführte Arbeitsmittel übertragen. Das Arbeitsmittel geht hierbei vom flüssigen in den gasförmigen Aggregatszustand über. Im Verdichter 2 wird das Gas verdichtet und auf ein höheres Temperatur- wie auch Druckniveau gebracht und anschließend an den Verflüssiger 4 weitergeleitet. In diesem Wärmetauscher gibt das Arbeitsmittel Wärmeenergie an einen Sekundärkreislauf, beispielsweise einen Heizkreislauf ab. Dabei verflüssigt sich das Arbeitsmittel. Das Temperaturniveau sowie das Druckniveau sind jedoch weiterhin höher als im Bereich zwischen Verdampfer 8 und Verdichter 2. Im nachfolgenden Drosselorgan 6 wird das Arbeitsmittel wieder auf einen niedrigeren Druckwert entspannt.

Wie aus der Fig. 1A zu entnehmen ist, wird das im Verflüssiger 4 kondensierte Arbeitsmittel über den in diesem Fall als Zuströmstutzen ausgebildeten Anschlussstutzen 18A in den Sammelraum 20 eingeleitet und über den zweiten Anschlussstutzen 18B aus diesem Sammelraum 20 wieder ausgestoßen. Die Anschlussstutzen 18A, 18B tauchen daher in das flüssige Arbeitsmittel ein. Die Füllstandshöhe des flüssigen Arbeitsmittels ist in den Fig. 1A, 1B dargestellt. Im Betrieb erreicht dieses beispielsweise etwa 1/3 der Gesamthöhe des Behälters. Da der Innenraum 14 in den ersten Teilabschnitt 10A geschaltet ist, herrscht im Innenraum 14 der in diesem Teilabschnitt 10A eingestellte hohe Druck (vor dem Drosselorgan 6). Parallel wird die Rohrwendel 16 von dem vom Verdampfer 8 kommenden gasförmigen Arbeitsmittel durchströmt. Aufgrund des höheren Temperaturniveaus des vom Verflüssiger 4 kommenden flüssigen Arbeitsmittels erfolgt daher eine Überhitzung des vom Verdampfer 8 kommenden gasförmigen Arbeitsmittels. Dadurch ist zuverlässig gewährleistet, dass keine Flüssigkeitsbestandteile mehr enthalten sind, die zu einer Schädigung des Verdichters 2 führen könnten.

In dem in Fig. 1A dargestellten Normalbetrieb führt die Anordnung des Kombielements durch die zusätzliche Überhitzung des Arbeitsmittels zu einer Erhöhung des COP's. Durch den Wärmetausch wird auf der anderen Seite gleichzeitig die Temperatur des flüssigen Arbeitsmittels nach dem Verflüssiger 4 erniedrigt, was ebenfalls zu einer Verbesserung des COP führt.

Die Situation im Abtaumodus ergibt sich aus Fig. 1 B: Das gasförmige Arbeitsmittel vom Verdichter 2 wird durch entsprechende Umschaltung des 4-Wegeventils 22 zum Verdampfer 8 geleitet, der im Abtaumodus als Verflüssiger wirkt. Die Komponenten werden daher in umgekehrter Strömungsrichtung durchströmt. Auch im Abtaumodus wird über die Anschlussstutzen 18A, 18B flüssiges Arbeitsmittel in den Innenraum 14 eingebracht. Lediglich die Strömungsrichtung hat sich geändert. Im Abtaumodus ist von besonderem Vorteil, dass durch die Zwischenschaltung des Kombielements 12A sichergestellt ist, dass der Verflüssiger 4 (nunmehr im Abtaumodus als Verdampfer wirkend) ausschließlich mit Flüssigkeit betrieben wird. Insgesamt wird durch diese Anordnung im Vergleich zu einer Ausgestaltung ohne Kombielement die für die Abtauung des Verdampfers erforderliche Zeitspanne deutlich reduziert, und zwar um bis zu etwa 10%. Dadurch ergibt sich insgesamt eine Erhöhung des COP's der Wärmepumpenanlage.

Der Abtaumodus entspricht zumindest im Wesentlichen dem Kühlbetrieb bei einer reversiblen Wärmepumpenanlage. Bei der in Fig. 2 dargestellten Ausführungsvariante mit der alternativen Ausgestaltung des Kombielements 12B und der Ausgestaltung als Wasser-Wasser-Wärmepumpenanlage wird die Rohrwendel 16 vom flüssigen Arbeitsmittel durchströmt und das vom Verdampfer 8 kommende gasförmige Arbeitsmittel wird in den Innenraum 14 eingeleitet. Eventuelle Restfeuchtebestandteile können sich im Sammelraum 20 ansammeln. Ergänzend wird durch den Wärmetausch mit dem heißeren durch die Rohrwendel 16 geführten Arbeitsmittel eine Überhitzung des gasförmigen Arbeitsmittels herbeigeführt.

Durch die spezielle Anordnung und Ausgestaltung der Anschlussstutzen 18A, 18B wie sie sich insbesondere aus Fig. 4 ergibt, ist zuverlässig gewährleistet, dass in den abgehenden Anschlussstutzen (Abströmstutzen 18B) ausschließlich gasförmige Bestandteile austreten und zum Verdichter 2 gelangen.

Die beiden unterschiedlichen Anordnungen und Ausgestaltungen des Kombielements 12A, 12B lassen sich sowohl bei einer Luft-Wasser-Wärmepumpenanlage als auch bei einer Wasser-Wasser-Wärmepumpenanlage verwirklichen.

Der gesamte Kreislaufprozess wird mit Hilfe einer Steuer- und Regelungseinrichtung gesteuert und geregelt, die hier nicht näher dargestellt ist. Aufgrund der durch die Zwischenschaltung des Kombielements 12A, 12B bereitgestellten zusätzlichen Wärmetauscherfläche ist eine speziell angepasste Regelung vorgesehen. Um einen möglichst effizienten Betrieb und Regelung zu ermöglichen ist hierfür das Drosselorgan als elektrisch oder elektronisch steuerbares Drosselorgan ausgestaltet.

Insgesamt ist durch die hier beschriebene Kombination aus Kombielement 12A, 12B, Verdampfer 8 und Verflüssiger 4 in Ergänzung mit einer intelligenten Regelung eine Verbesserung des Wirkungsgrad (COP-Wert) von bis zu 10% ermöglicht. Im Abtaumodus ist eine Verkürzung der Abtauzeit ebenfalls um etwa 10% erreicht.

Wie aus den Fig. 3 und 4 zu entnehmen ist, weist das Kombielement 12A, 12B jeweils ein nach Art eines Druckbehälters ausgebildetes Gefäß 24 auf, welches in etwa zylindrisch ist. Die Anschlüsse an den Kreislauf befinden sich alle samt an der Deckelseite. Bei beiden Ausführungsvarianten ist im Innenraum 14 die Rohrwendel 16 angeordnet, die einen Zentralraum 26 umschließt, in dem die Anschlussstutzen 18A, 18B hineinreichen.

Im Ausführungsbeispiel der Fig. 3 sind die beiden Anschlussstutzen 18A, 18B identisch ausgebildet. Die Anschlussstutzen 18A, 18B weisen endseitig jeweils die Mündungsöffnungen 28A, B auf, über die die Anschlussstutzen strömungstechnisch mit dem Innenraum 14 verbunden sind.

Im Ausführungsbeispiel der Fig. 3 sind die Anschlussstutzen 18 A, 18B als einfache, geradlinig verlaufende Rohre ausgebildet. Die Mündungsöffnungen 28A, B befinden sich in unmittelbarer Nähe des Bodens des Gefäßes 24 und damit im Sammelraum 20, in den sich im Betrieb flüssiges Arbeitsmittel befindet.

Bei der zweiten Ausführungsvariante gemäß Fig. 4 sind demgegenüber die beiden Anschlussstutzen 18A, 18B unterschiedlich ausgebildet. Der als Zuströmstutzen ausgebildete Anschlussstutzen 18A ist als einfaches Rohr ausgebildet, dass sich lediglich bis in einen oberen Bereich des Innenraums 14 erstreckt und beispielsweise im oberen Drittel seine Mündungsöffnung 28A aufweist. Im Unterschied hierzu ist der zweite als Abströmstutzen ausgebildete Anschlussstutzen 18B als ein U-förmig gebogenes Rohr ausgebildet, dessen beiden Schenkel sich insbesondere über die gesamte Länge des durch die Rohrwendel 16 gebildeten Zentralraums 26 erstrecken. Seine Mündungsöffnung 28B liegt ebenfalls im oberen Bereich des Innenraums 14 und zwar oberhalb der Mündungsöffnung 28A des Zuströmstutzens 18A.

### Bezugszeichenliste

- 2: Verdichter
- 4: Verflüssiger
- 6: Drosselorgan
- 8: Verdampfer
- 10A: erster Teilabschnitt
- 10B: zweiter Teilabschnitt
- 12A,B: Kombielement
- 14: Innenraum
- 16: Rohrwendel
- 18A,B: Anschlussstutzen
- 20: Sammelraum
- 22: Umschaltorgan
- 24: Gefäß
- 26: Zentralraum
- 28A,B: Mündungsöffnung

## Patentansprüche

1. Wärmepumpenanlage mit einem in einem Kreislauf geführten Arbeitsmittel, bei der im Kreislauf ein Verdichter (2), ein Verflüssiger (4), ein Drosselorgan (6) sowie ein Verdampfer (8) angeordnet sind, und im Betrieb das Arbeitsmittel in einem ersten Teilabschnitt (10A) als zumindest weitgehend flüssiges Arbeitsmittel und in einem zweiten Teilabschnitt (10B) des Kreislaufes als zumindest weitgehend gasförmiges Arbeitsmittel geführt ist, wobei ein Kombielement (12A,B) vorgesehen ist, das sowohl in den ersten als auch zweiten Teilabschnitt (10A,B) eingebunden ist und als ein Zwischenwärmetauscher zum Wärmetausch zwischen dem gasförmigen und dem flüssigen Arbeitsmittel mit integriertem Sammelraum (20) für flüssiges Arbeitsmittel ausgebildet ist.

2. Wärmepumpenanlage nach Anspruch 1, wobei das Kombielement (12A,B) saugseitig vor dem Verdichter (2) im zweiten Teilabschnitt (10B) angeordnet ist.

3. Wärmepumpenanlage nach einem der vorhergehenden Ansprüche, wobei das Kombielement (12A,B) im ersten Teilabschnitt (10A) zwischen dem Verflüssiger (4) und dem Drosselorgan (6) angeordnet ist.

4. Wärmepumpenanlage nach einem der vorhergehenden Ansprüche, wobei das Drosselorgan (6) elektrisch oder elektronisch geregelt ist.

5. Wärmepumpenanlage nach einem der vorhergehenden Ansprüche, wobei das Kombielement (12A,B) ein Gefäß (24) mit einem den Sammelraum (20) aufweisenden Innenraum (14) umfasst, in den Anschlussstutzen (18A,B) zum Anschluss an einen der Teilabschnitte (10A,B) münden und durch den eine geschlossene Leitung (16) für das Arbeitsmittel des anderen Teilabschnitts (10A,B) verläuft, wobei die Anschlussstutzen (18A,B) insbesondere an einer Oberseite des Gefäßes (24) angeordnet sind.

6. Wärmepumpenanlage nach Anspruch 5, wobei die geschlossene Leitung als eine Rohrwendel (16) ausgebildet ist.

7. Wärmepumpenanlage nach einem der Ansprüche 5 oder 6, wobei zumindest einer der Anschlussstutzen (18A,B) sich entlang eines durch die Rohrwendel (16) gebildeten Zentralraums (26) erstreckt.

8. Wärmepumpenanlage nach einem der Ansprüche 5 bis 7, wobei der erste Teilabschnitt (10A) an die Anschlussstutzen (18A,B) angeschlossen ist.

9. Wärmepumpenanlage nach einem der Ansprüche 5 bis 8, wobei zumindest einer, vorzugsweise beide Anschlussstutzen (18A,B) bis in den Sammelraum (20) reichen.

10. Wärmepumpenanlage einem der Ansprüche 5 bis 9, wobei der zweite Teilabschnitt (10B) für das gasförmige Arbeitsmittel an die Anschlussstutzen (18A,B) angeschlossen ist.

11. Wärmepumpenanlage nach Anspruch 10, wobei einer der Anschlussstutzen (18B), nämlich ein Abströmstutzen in einen oberen Bereich des Innenraums (14) oberhalb des Sammelraums (20) mündet und insbesondere U-förmig mit zwei sich in den Innenraum (14) erstreckenden U-Schenkeln ausgebildet ist.

12. Wärmepumpenanlage nach Anspruch 11, wobei der zweite Anschlussstutzen (18A), nämlich ein Einströmstutzen im oberen Bereich des Innenraums (14) oberhalb des Sammelraums (20) mündet.

13. Wärmepumpenanlage nach einem der vorhergehenden Ansprüche, wobei der Verdampfer (8) als ein Luft-Flüssigkeit-Wärmetauscher oder als ein Flüssigkeit-Flüssigkeit Wärmetauscher ausgebildet ist.

14. Wärmepumpenanlage nach einem der vorhergehenden Ansprüche, wobei ein Umschaltorgan (22) zur Kreislaufumkehr für einen Abtaumodus oder für einen Kühlbetrieb vorgesehen ist.

15. Verfahren zum Betrieb einer Wärmepumpenanlage, bei dem in einem Kreislauf ein Arbeitsmittel über einen Verdichter (2), einen Verflüssiger (4), ein Drosselorgan (6) sowie einen Verdampfer (8) geführt wird und das Arbeitsmittel in einem ersten Teilabschnitt (10A) als zumindest weitgehend flüssiges Arbeitsmittel und in einem zweiten Teilabschnitt (10B) des Kreislaufes als zumindest weitgehend gasförmiges Arbeitsmittel geführt ist, wobei ein Kombielement (12A,B) vorgesehen ist, durch das zum wechselseitigen Wärmetausch das gasförmige sowie das flüssige Arbeitsmittel geführt sind und das mit einem integriertem Sammelraum (20) ausgebildet ist, in dem sich flüssiges Arbeitsmittel befindet und ansammeln kann.
